# EUROPÄISCHE PATENTSCHRIFT

(11) **EP 0 812 728 B1**
(45) Veröffentlichungstag und Bekanntmachung des Hinweises auf die Patenterteilung: **30.05.2001**
(21) Anmeldenummer: 97105349.1
(22) Anmeldetag: 29.03.1997
(51) Int. Cl.: B60R 7/08

(54) **Münzhalter für Kraftfahrzeuge**
Coin support for vehicles
Support pour pièce de monnaie pour véhicules

(30) Priorität: 14.06.1996 DE 29610478 U
(43) Veröffentlichungstag der Anmeldung: 17.12.1997
(73) Patentinhaber: fischerwerke Artur Fischer GmbH & Co. KG, 72178 Waldachtal (DE)
(72) Erfinder: Ziegler, Christiane, Dipl.-Ing. FH, 72178 Waldachtal (DE); Lange, Carsten, 85283 Wolnzach (DE); Widulle, Rüdiger,Dipl.-Ing. FH, 81547 München (DE)

(56) Entgegenhaltungen:
- US-A- 2 829 777
- US-A- 2 896 892
- US-A- 4 568 117
- US-A- 5 449 105

## Beschreibung

Die Erfindung betrifft einen Münzhalter für Kraftfahrzeuge gemäß Oberbegriff des Anspruchs 1.

Aus der US-PS 5,449,105 ist ein Münzhalter für Fahrzeuge nach dem Oberbegriff des Anspruchs 1 bekannt, der ein senkrecht in das Gehäuse des Münzhalters einschiebbares Aufnahmeelement für mehrere Münzen besitzt. Der Münzhalter kann beispielsweise in der Konsole eines Kraftfahrzeugs angeordnet sein. Durch einen Druck auf das Aufnahmeelement wird dieses entriegelt und von einer Feder in eine Entnahmeposition linear nach oben bewegt. Durch Niederdrücken des Aufnahmeelements kann dieses wieder zurück in die Aufbewahrungsposition gegen die Federkraft verschoben werden. Durch den großen Hub, der bei der Verschiebung in die Entnahmeposition ausgeführt werden muß, ergibt sich insgesamt eine relativ große Einbautiefe für diesen bekannten Münzhalter.

Der Erfindung liegt die Aufgabe zugrunde, einen Münzhalter für Kraftfahrzeuge zu schaffen, der in der Entnahmeposition nur wenig aus einer Konsole vorsteht und einfach in der Handhabung ist.

Die Lösung dieser Aufgabe erhält man durch die im Anspruch 1 angegebenen Merkmale. Das Aufnahmeelement, welches die aufzubewahrenden Münzen aufnimmt, ist um eine horizontale Schwenkachse im Gehäuse des Münzhalters derart gelagert, daß es bequem aus dem Gehäuse in eine Entnahmeposition verschwenkt werden kann. Damit der Münzhalter sich problemlos in der Konsole eines Kraftfahrzeugs positionieren läßt, ist das verschwenkbare Aufnahmeelement außerdem linear verschiebbar im Gehäuse des Münzhalters gelagert. Dies hat den Vorteil, daß das Aufnahmeelement in der Entnahmeposition bei unbeabsichtigter Berührung oder beim Herunterschwenken der Mittelarmlehne bis auf das Aufnahmeelement federnd zurückweichen kann und dadurch gegen Beschädigung weitgehend sicher ist.

Das Aufnahmeelement ist vorzugsweise als halbzylindrisches Teil mit mehreren seitlichen Aufnahmeöffnungen für Münzen ausgebildet. Die Halterung für die einzelnen Münzen kann dabei in der Weise erfolgen, wie dies bei herkömmlichen und allgemein bekannten Münzhaltern der Fall ist.

Der Aufnahmeraum für das Aufnahmeelement kann an die Form des Aufnahmeelements angepaßt sein, so daß bei einem halbzylindrischen Aufnahmeelement auch der Aufnahmeraum halbzylindrisch ausgebildet sein kann.

Die Erfindung wird nachfolgend anhand eines in der Zeichnung dargestellten Ausführungsbeispiels näher erläutert.

Es zeigen:
- Figur 1: einen Münzhalter mit einem in der Aufbewahrungsposition befindlichen Aufnahmeelement für Münzen,
- Figur 2: den Münzhalter von Figur 1 mit in Entnahmeposition befindlichem Aufnahmeelement und
- Figur 3: den Münzhalter von Figur 2 mit federnd nach unten gedrücktem Aufnahmeelement.

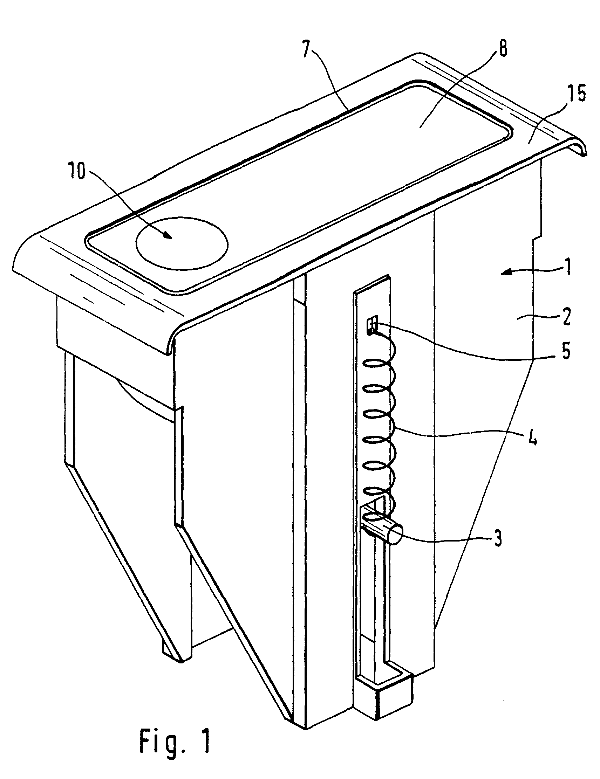

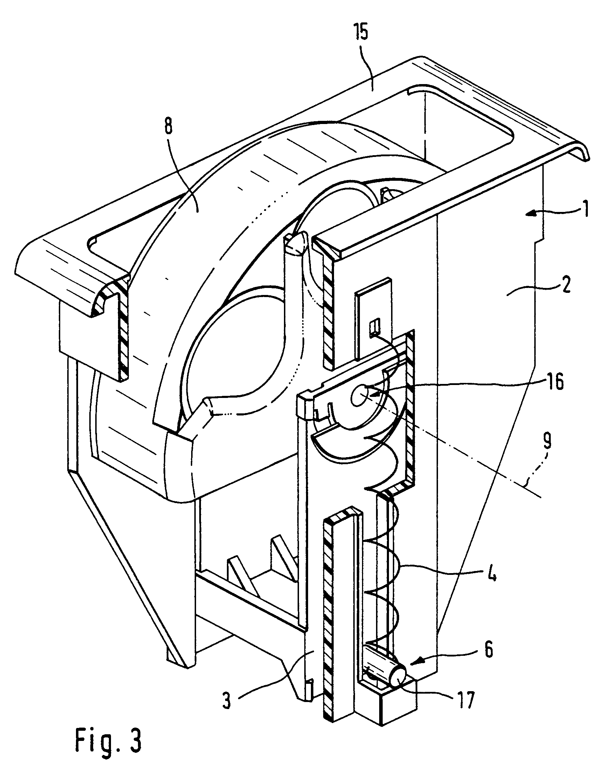

Der in Figur 1 dargestellte Münzhalter 1 besitzt ein Gehäuse 2, in welchem ein linear verschiebbares Schieberelement 3 einliegt. Das Schieberelement ist gegen die Kraft einer als Zugfeder 4 ausgebildeten Schraubenfeder, die an ihrem oberen Ende an einer Öffnung 5 des Gehäuses 2 befestigt ist, in eine untere Position 6, die in Figur 3 gezeigt ist, linear verschiebbar.

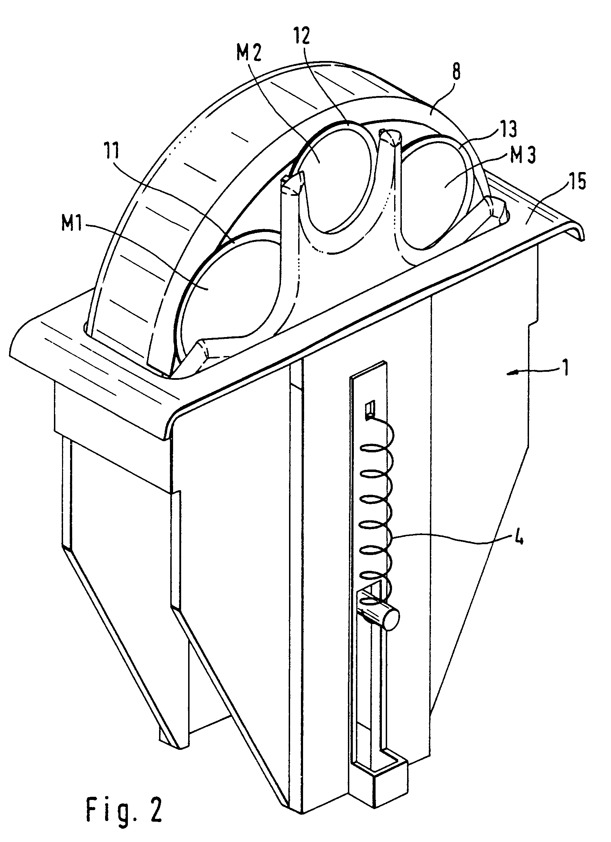

Das Gehäuse 2 besitzt oben eine Öffnung 7, in der ein um eine Schwenkachse 9, die in Figur 3 ersichtlich ist, schwenkbares Aufnahmeelement 8 einliegt. In Figur 1 befindet sich das Aufnahmeelement 8 in der Aufbewahrungsposition, aus der es durch Druck von oben, beispielsweise im Bereich 10, in die in Figur 2 dargestellte Entnahmeposition verschwenkt werden kann.

Das in Figur 2 in der Entnahmeposition befindliche Aufnahmeelement 8 ist für die Aufnahme mehrerer Münzen M1 bis M3 vorgesehen, von denen jeweils mehrere gleich große Münzen übereinanderliegend in entsprechenden Aufnahmeöffnungen 11 bis 13 gehalten werden. Die Münzen M1 bis M3 lassen sich bequem mit dem Daumen seitlich entnehmen. In umgekehrter Weise können auch Münzen in die Aufnahmeöffnungen 11 bis 13 seitlich eingeschoben werden, wie dies auch bei ansich bekannten Münzhaltern der Fall ist. Nach dem Entnehmen oder Einschieben von Münzen kann das in etwa halbzylindrische Aufnahmeelement 8 wieder um 180° in die in Figur 1 dargestellte Aufbewahrungsposition verschwenkt werden.

Der in eine hier nicht dargestellte Konsole eines Kraftfahrzeugs eingebaute Münzhalter liegt nahezu vollständig in der Konsole ein, so daß lediglich der das Aufnahmeelement 8 umschließende Rahmen 15 und das Aufnahmeelement 8 von oben sichtbar sind. Das in Figur 3 ersichtliche Schwenklager 16, welches das Verschwenken des Aufnahmeelements 8 ermöglicht, befindet sich innerhalb des Gehäuses 2 und somit auch innerhalb der Konsole, in die der Münzhalter eingebaut ist. Das Schwenklager 16 ist zusammen mit dem Aufnahmeelement 8 vertikal aus der in Figur 2 dargestellten Entnahmeposition in die in Figur 3 dargestellte, abgesenkte Position gegen die Kraft der Zugfeder 4 linear verschiebbar. In Figur 3 befindet sich das Schieberelement 3, an dem das Schwenklager 16 ausgebildet ist, mit seinem Führungszapfen 17 in der untersten Endposition. Diese lineare Verschiebung in die in Figur 3 dargestellte Endposition kann durch einen senkrechten Druck von oben auf das Aufnahmeelement 8 erfolgen.

## Patentansprüche

1. Münzhalter für Kraftfahrzeuge, dessen Gehäuse in einer Konsole einsetzbar ist und ein Aufnahmeelement für mehrere Münzen hat, wobei das Aufnahmeelement aus einer Aufbewahrungsposition in eine Entnahmeposition, und umgekehrt, bringbar ist und welches linear gegen die Kraft einer Feder in das Gehäuse einschiebbar ist, **dadurch gekennzeichnet,** daß das Aufnahmeelement (8) mittels eines Schwenklagers (16) um eine horizontale Schwenkachse (9) aus dem Gehäuse (2) des Münzhalters (1) aus der Aufbewahrungsposition in die Entnahmeposition verschwenkbar ist.

2. Münzhalter nach Anspruch 1, **dadurch gekennzeichnet,** daß ein Schieberelement (3), an dem das Schwenklager (16) angeordnet ist, sich über eine Schraubenfeder am Gehäuse (2) des Münzhalters (1) abstützt.

3. Münzhalter nach Anspruch 1, **dadurch gekennzeichnet,** daß das Aufnahmeelement (8) ein im wesentlichen halbzylindrisches Teil mit mehreren seitlichen Aufnahmeöffnungen (11 bis 13) für Münzen (M1, M2, M3) ist.

## Claims

1. Coin holder for motor vehicles, the housing of which can be inserted into a control panel and that has a receptacle element for a plurality of coins, it being possible for the receptacle element to be moved from a storage position to a removal position, and *vice versa*, and inserted rectilinearly into the housing against the force of a spring, characterised in that the receptacle element (8) is rotatable by means of a rotation bearing (16) about a horizontal axis (9) of rotation out of the housing (2) of the coin holder (1) from the storage position to the removal position.

2. Coin holder according to claim 1, characterised in that a slider element (3), on which the rotation bearing (16) is arranged, bears against the housing (2) of the coin holder (1) by way of a helical spring.

3. Coin holder according to claim 1, characterised in that the receptacle element (8) is a substantially semi-cylindrical part having a plurality of lateral receiving openings (11 to 13) for coins (M1, M2, M3).

## Revendications

1. Dispositif de rangement de la monnaie destiné à des véhicules automobiles, dont le boîtier peut être encastré dans une console de bord et comporte un élément de réception pour plusieurs pièces de monnaie, l'élément de réception pouvant être déplacé d'une position de rangement dans une position de prélèvement et inversement, et lequel peut se déplacer linéairement dans le boîtier à l'encontre de la force exercée par un ressort, caractérisé en ce que l'élément de réception (8) peut pivoter à l'aide d'un coussinet de pivotement (16) autour d'un axe de pivotement (9) horizontal pour sortir du boîtier (2) du dispositif de rangement (1), de la position de rangement de la monnaie dans la position de prélèvement.

2. Dispositif de rangement de la monnaie selon la revendication 1, caractérisé en ce qu'un curseur (3), contre lequel est disposé le coussinet de pivotement (16), est en appui contre le boîtier (2) du dispositif de rangement de la monnaie (1) par l'intermédiaire d'un ressort à boudin.

3. Dispositif de rangement de la monnaie selon la revendication 1, caractérisé en ce que l'élément de réception (8) est une partie sensiblement semi-cylindrique munie de plusieurs ouvertures de réception (11 à 13) latérales pour des pièces de monnaie (M1, M2, M3).
